# EUROPEAN PATENT SPECIFICATION

(11) **EP 3 319 712 B1**
(45) Date of publication and mention of the grant of the patent: **31.07.2019**
(21) Application number: 16734394.6
(22) Date of filing: 04.07.2016
(51) Int. Cl.: B01D 53/86, B01D 46/02, F23J 15/02

(54) **DEVICE FOR CLEANING FUMES INCLUDING A BAGFILTER AND A CATALYST**
VORRICHTUNG ZUR REINIGUNG VON RAUCHGASEN MIT EINEM SCHLAUCHFILTER UND EINEM KATALYSATOR
DISPOSITIF DE NETTOYAGE DE FUMÉES COMPRENANT UN FILTRE À SACS ET UN CATALYSEUR

(30) Priority: 08.07.2015 FR 1556465
(43) Date of publication of application: 16.05.2018
(73) Proprietor: LAB SA, 69007 Lyon (FR)
(72) Inventor: DERRO, Charles, 69300 Cuire et Caluire (FR); SIRET, Bernard, 69200 Venissieux (FR); TABARIES, Frank, 83430 Saint Mandrier Sur Mer (FR)
(74) Representative: Lavoix
(86) International application number: PCT/EP2016/065671
(87) International publication number: WO 2017/005679

(56) References cited:
- EP-A2- 0 318 934
- DE-A1- 3 632 405
- FR-A3- 2 848 876
- JP-A- H05 217
- JP-A- H11 300 163
- JP-A- 2001 269 528

## Description

The present invention concerns a device for cleaning fumes and an installation for treating fumes.

Combustion processes whether of fossil fuels or waste generate fumes containing harmful components including fine particles, acid gases such as SO₂ and HCl, and nitrogen oxides. The scrubbing of acid gases usually uses wet scrubbers or dry scrubbers where the acid gases are caused to react with a neutraliser such as lime, the products formed being collected downstream by a bag filter or electrostatic precipitator. Nitrogen oxides are usually destroyed either in the combustion zone itself as in non-catalytic processes commonly called Selective Non Catalytic Reduction (SNCR) or by causing these nitrogen oxides to react on a catalyst with a suitable reagent such as ammonia or urea using processes known as Selective Catalytic Reduction (SCR).

Traditionally the removal of acid pollutants and the destruction of nitrogen oxides via catalytic route are respectively carried out in two physically separate units, for example a bag filter followed by a catalytic reactor, or a catalytic reactor followed by a scrubber.

However, it has already been proposed to combine the removal or acid pollutants and nitrogen oxide destruction in a single unit via catalytic route. The most accepted solution uses catalytic bag filters; a catalyst is either impregnated on the bag filter or inserted in the bag filter media. US 2002/0041841, WO 2014/131864, WO 2007/04564 and WO 2006/103040 give examples thereof. These solutions based on catalytic bag filters are commercially available but suffer from several disadvantages. First, they are costly. Next, the thickness through which the gases pass is small and therefore the contact time between the gas and the bag is very short, which limits catalytic conversion and requires relatively high operating temperatures typically in the order of 200°C, even higher if it is desired to destroy dioxins. Finally when the catalyst is poisoned the catalyst and bag assembly must be changed.

DE 195 19 233 proposes placing small blocks of catalyst in honeycomb arrangement inside the output of bag filters. This solution also has shortcomings. Through its presence, the catalyst hampers the blowing power of air jet under pressure into the bag outlet, and limits the pulse jet cleaning efficiency. In addition, the overall volume of all the small blocks of catalyst is limited since the available volume inside bag filter outlets is not large. In addition, the packaging and placing in position of small blocks of catalyst can be labour-intensive and costly.

Also JP H 11 300 163, which can be considered to be the closest state of the art to the invention, discloses a cleaning device in which the fume circulation casing integrates a vertical bag filter and catalyst having channels, through which the gases successively pass. The catalyst is divided into unit elements, each unit element being removably and vertically mounted in the casing so that it can be regularly interchanged with a new catalyst unit element when the catalyst of the unit element in place is poisoned. Inside the casing, the catalyst unit elements overhang the bag filter outlet being separated therefrom by a substantial distance, typically a few metres: this substantial distance is necessary first to allow enough space for the arrangement of piping to inject a denitrification reagent, positioned between the bag filter outlet and the inlet of the catalyst channels, and secondly to allow this reagent after injection to be distributed throughout the fumes so that the mixture of gases and this reagent is sufficiently homogenous at the channel inlets. The total height of the casing is therefore very high. This adds to the costs and makes maintenance of the filter bags more complicated and labour intensive: when replacement of the filter bags is required, , all the catalyst unit elements must be removed via the top of the casing and from this top of the casing it must be reached down to the lower-lying filter bags to draw them upwards and out of the top of the casing. This cleaning device therefore proves to be costly to manufacture and to use.

It is the objective of the present invention to propose a fume cleaning device which, whilst accumulating the functions of destroying nitrogen oxides via catalytic route and removing acid pollutants, remains both compact, economical, practical and efficient.

For this purpose the subject of the invention is a device as defined in claim 1.

The invention provides an integrated device in that, in one same casing, the fumes to be purified are first filtered, their acid pollutants being removed by passing through the filter bags, then denitrified by passing through a structured catalyst, it being understood that upstream of the device a denitrification reagent has been added to these fumes. It is to be understood that in the present document, the term "fumes" is used to indifferently designate the flue gas entering the casing of the device, the gas circulating inside this casing and the exhausts exiting from the casing. The integrated device conforming to the invention associates efficiency with compactness by arranging the structured catalyst just downstream and above the filter bags: fumes are directed into the catalyst, fumes that are known to be « non-harmful » for the catalyst i.e. fumes that have just been cleaned of dust and acid pollutants as well as of some other pollutants by the filter bags and a corresponding neutralising agent, thereby allowing the use - without risk of fouling or premature deactivation - of a catalyst having channels of characteristic small size namely having a hydraulic diameter of less than 6 mm. By vertically distancing the catalyst from the bag outlets by a distance of at least 2.5 times the hydraulic diameter of these bags, the gases leaving the bags are able to be redistributed homogeneously before they enter into the channels of the catalyst. By placing the catalyst at less than 6 times the hydraulic diameter from the bags, the total height of the casing is limited and together with the fact that the catalyst is divided into adjacent unit elements able to be moved horizontally in the casing by means of dedicated fittings, this results in largely facilitated filter bag maintenance operations. In addition, the device conforming to the invention does not require costly or complex arrangements and even allows the insertion of means inside the casing, between the bags and catalyst, to de-clog the bags by so called pulse jet cleaning. Other advantages and benefits of the inventions are explained below.

Additional advantageous characteristics of the device conforming to the invention are specified in the dependent claims.

A further subject of the invention is an installation as defined in claim 11.

The invention will be better understood on reading the following description given solely as an example and with reference to the drawings in which:
- Figure 1 is a schematic cross-section of a fumes cleaning device conforming to the invention;
- Figure 2 is a partial perspective schematic along arrow II in Figure 1;
- Figure 3 is a similar view to Figure 2 illustrating a different configuration of utilisation of the purification device;
- Figure 4 is a schematic cross-section along plane IV in Figure 2; and
- Figure 5 is a schematic cross-section along line V-V in Figure 1.

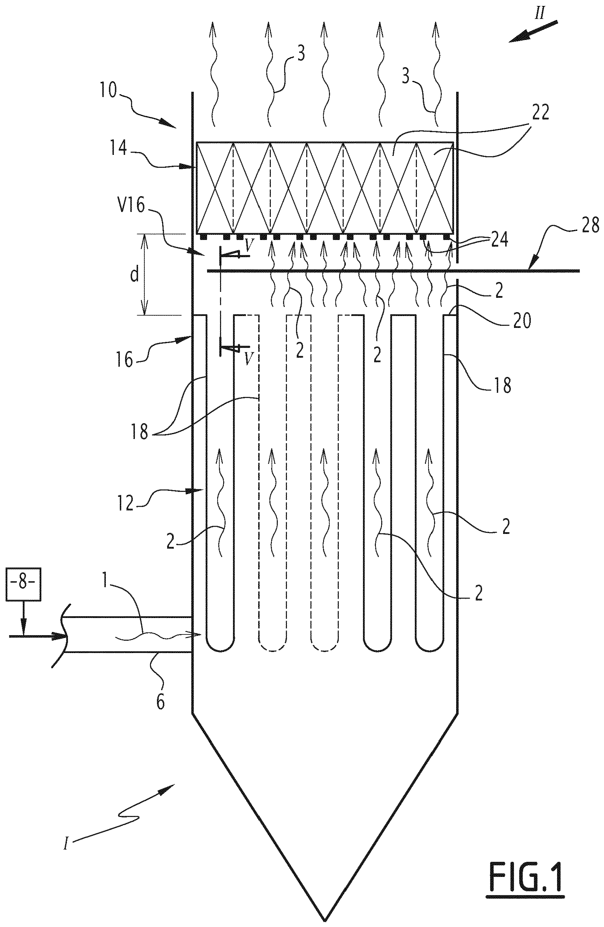

Figures 1 to 5 illustrate a fume cleaning device 10 belonging to an installation I for treating fumes. This device chiefly comprises a filter 12 and a catalyst 14 which are integrated inside one same casing 16. When in service the casing 16 extends substantially vertically, the remainder of the description of the device 10 being oriented accordingly.

The filter 12 is arranged in the lower part of the casing 16. This filter 12 comprises filter bags 18 arranged vertically inside the casing 16. In Figure 1 only some filter bags 18 are illustrated, the total number thereof not limiting the invention. Each filter bag 18 is known *per se* and has a vertical length of between 3 and 10 metres and is supported by a cage not illustrated in detail in the Figures. The cross-section of each filter bag 18 generally has a circular profile, with a diameter of between 100 and 300 mm, although other geometries can be used. The cages supporting the filter bags 18 rest on a holed plate 20 and at the horizontal level of this plate are arranged the respective outlets of these filter bags.

The catalyst 14 is arranged in the top part of the casing 16 being positioned above the filter bags 18. The catalyst is known as such and relates to catalysts conventionally used in catalytic denitrification processes, in other words SCR NOx removal processes. More specifically the catalyst 14 is structured in channels with the inlet facing downwards, towards the outlet of the filter bags 18. In the invention, the profile of the channels of the catalyst 14 is non-limiting.

When in service the installation I is operated so that fumes to be cleaned 1, which are flue gas coming from a combustion unit, are sent to the base of the casing 16 via an inlet duct 6 as schematically illustrated in Figure 1. Upstream of the device 10, the fumes 1 are mixed with a denitrification reagent such as ammonia, being pointed out that the means to convey this reagent into the fumes is known *per se* and is schematically indicated under reference 8 in Figure 1. The type of the means 8 is not limitative for the invention and the point or the points of the installation I at which the denitrification reagent is added to the fumes 1 upstream the device 10 are more or less away from the device 10. For example, at least a part of the denitrification reagent may be added to the fumes 1 by means 8 in the inlet duct 6. It is also possible that the fumes 1 entering the casing 16 already contain enough denitrification reagent and that no further addition at the inlet duct 6 is needed, for example when an SNCR is used upstream.

Inside the casing 16, the fumes 1 pass through the filter bags 18 and the filter cake which gradually forms on the outer surface of these filter bags. The fumes 2 reaching the inside of the filter bags 18 are therefore cleaned of the dust and acid pollutants they contain e.g. SO₂ and HCl. It is to be clearly understood that, in order to achieve acid pollutants removal, like SO₂ and HCl, some neutralizing agent like lime or sodium bicarbonate has to be injected upstream of the filter bags 18. These fumes 2 move upwards inside the filter bags 18 until they leave these bags via the upper outlet of these bags to reach the free volume V16 formed vertically, inside the casing 16, between the filter bags 18 and the catalyst 14, more specifically between the outlet of these bags and the inlet of the catalyst channels. This free volume has a vertical dimension d which therefore corresponds to the vertical distance separating the outlet of the filter bags 18 and the inlet of the catalyst channels 14: according to one characteristic of the invention this vertical distance d is between 2.5 and 6 times the hydraulic diameter of the filter bags 18, this hydraulic diameter being defined as the ratio between four times the cross-section of the filter bag and the perimeter of the bag. Still inside the casing 16, the fumes 2 then pass through the catalyst 14, the fumes 3 leaving the catalyst therefore being rid of their nitrogen oxides via catalytic reduction known *per se.* These purified fumes 3 are evacuated from the device 10 by conventional means not illustrated in the Figures.

It is to be understood that the vertical sizing of the free volume V16 formed inside the casing 16, between the filter bags 18 and the catalyst 14, has several advantages. For example by providing a distance d of at least 2.5 times the hydraulic diameter of the filter bags 18, the fumes 2 leaving these filter bags can be redistributed homogeneously before entering the channels of the catalyst 14, which is to be appreciated since in practice the outlet orifices of the filter bags 18 jointly have a smaller total cross-section than the cross section inlets of the channels of the catalyst 14. In addition, as explained above, the fumes 2 sent from the filter 12 to the catalyst 14 have been cleaned by the filter bags 18 of the acid pollutants, dust and other solids carried by the fumes 1: since these fumes 2 circulate inside the casing 16 directly from the outlet of the filter bags 18 to the inlet of the catalyst channels 14, fouling of the catalyst by these gases is kept to a very low level which means that, without any risk of accelerated or premature blocking by dust, the channels of the catalyst 14 can be chosen to have a characteristic small dimension namely with a hydraulic diameter of less than 6 mm. This improves the denitrification performance. In other words, by integrating the catalyst 14 just downstream of the filter bags 18 inside the same casing in which the fumes 16 circulate, the filter bags protect the catalyst by retaining the dust, acid gases and other potential poisons contained in the fumes to be purified 1; the channels for the structured catalyst 14 can therefore be chosen to have a small opening thereby ensuring a particularly long catalyst lifetime e.g. six years. In addition, the total vertical dimension of the casing 16 remains controlled since provision is made so that distance d is less than 6 times the hydraulic diameter of the filter bags.

In the continuation of the foregoing considerations, the volume of catalyst required for a given denitrification efficiency can be decreased by providing that the effective surface area of the catalyst 14, obtained by multiplying its specific surface area (in m²/m³) by its volume, is advantageously between 4 and 16 times the filtering surface of the filter bags 18, even preferably between 5 and 12 times this filtering surface area. In practice, since the catalyst 14 is protected by the filter bags 18 against clogging, the specific surface area of the catalyst 14 can be chosen to be large preferably between 800 and 1500 m²/m³.

One of the other advantages contributed by the invention is related to the fact that at start-up of device 10, in order to prevent wet flue gas from circulating in the casing 16 on the filter bags 18 and the casing 16 that are still cold, pre-heating dry air e.g. using a duct heater is first circulated in the casing before allowing entry of the fumes to be purified. The temperature of this dry pre heating air is typically between 130 and 250°C. When using a temperature higher than 200°C the hot air, which also passes through the catalyst 14 of the device 10 before leaving the device, at least partly regenerates the catalyst by re-volatising the volatile salts such as ammonium hydrogen sulphate, which tend to clog the pores of the catalyst. Therefore, on each stoppage/restart of the device 10, partial regeneration of the catalyst 14 is obtained thereby further increasing the lifetime thereof.

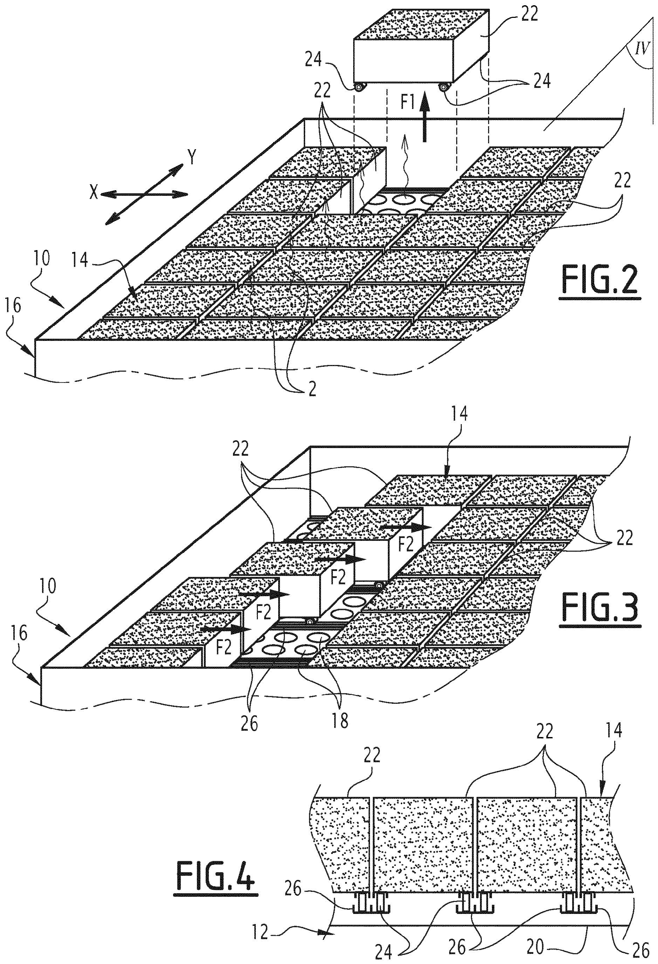

Additionally, insofar as deactivation of the catalyst 14 is inevitable and replacement of the filter bags 18 must be carried out in practical manner the device 10 is designed to allow easy replacement of the catalyst and filter bags. For this purpose the catalyst 14 is divided into unit elements 22 as illustrated in Figures 2 to 4. When in service the unit elements 22 are placed horizontally side by side inside the casing 16. It will be noted that the providing of said unit elements filled with catalyst is *known per se,* the advantage thereof as illustrated in Figure 2 being that each unit element is vertically removable relative to the others and to the casing 16 receiving the unit elements, so that by using ad *hoc* means each of the unit elements 22 can be extracted upwardly from the casing 16 previously opened at the top as indicated by arrow F1 for one of the unit elements 22 in Figure 2. In practice, as can be clearly seen in Figures 2 to 4, the unit elements 22 inside the casing 16 are arranged in several horizontal rows, the unit elements of one same row following after one another in a horizontal direction denoted Y in Figure 2 whilst the respective rows of unit elements follow after one another in a horizontal direction denoted X in Figure 2 perpendicular to the horizontal direction Y.

According to the invention the unit elements 22 containing the catalyst 14 are designed to move, in particular via rolling in the horizontal direction X relative to the casing 16. For this purpose according to one practical embodiment illustrated in Figures 2 to 4, each unit element 22 in its lower part is equipped with casters 24 engaged on guide rails 26, secured to the casing 16 and extending in the horizontal direction X: when rolling on the rails 16, the casters 24 allow translation of the unit element 22 in the horizontal direction X. Evidently the embodiment of the casters 24 and rails 26 does not limit the invention since rolling elements other than casters 24 can be envisaged such as roller bearings, rollers etc. the rails 26 being adapted accordingly to guide these rolling elements. In all cases in addition to allowing mobility of the unit elements in the horizontal direction X inside the casing 16, these roll elements and these guides enable each unit element 22 to be easily extracted vertically upwards from the casing.

It will be noted that when all the unit elements 22 of the device 10 are in position inside the casing 16, the mobility of the unit elements in horizontal direction X is neutralised since the unit elements 22 located on the periphery of the set of unit elements horizontally abuts the inner wall of the casing 16 as can be understood on observing Figure 2. On the other hand, after opening the top of the casing 16 and extracting one of the rows of the unit elements 22 by hoisting the unit elements of this row upwards as illustrated for example in Figure 3, the unit elements of the other rows can be easily moved in horizontal direction X inside the casing 16 as indicated by the arrows F2 in Figure 3, via rolling of their casters 24 on the rails 26. Combined with the fact that the vertical dimension of the casing 16 above the filter bags 18 is controlled by the dimensioning indicated above for distance d, the access to these filter bags is thus largely facilitated e.g. for the inspection and/or replacement of these filter bags: after extracting only one of the rows of unit elements 22 from the casing 16, the access to the filter bags 18 arranged vertically underneath this row is immediate, whilst to access the other filter bags 18 it is sufficient to move solely in the horizontal direction the other unit elements 22, typically by pushing them manually, and in all cases without having to have recourse to hoisting equipment. Evidently, once servicing of the filter bags 1 is completed, the same number of unit elements of catalyst as those extracted out of the casing 16 are placed inside this casing to make up for the missing row. The casing 16 can then be closed.

As non-limiting example, the casing 16 has a square cross-section profile with sides of 3500 mm. Forty-nine unit elements 22 measuring 500 by 500 by 500 mm are placed therein in seven rows of seven unit elements. To access the filter bags 18, one of the seven rows is extracted which clears a free space of 500 mm by 3500 mm, providing direct access to a few underlying rows of filter bags 18, the other rows of filter bags being accessible after moving the overlying unit elements 22 in the horizontal direction X.

According to one advantageous arrangement, the device 10 comprises means 28 for blowing air under pressure. As schematically illustrated in Figure 1, these blower means 28 are arranged in the free volume V16 of the casing 16, being inserted between the filter 12 and the catalyst 14, more specifically between the outlet of the filter bags 18 and the inlet of the channels of the catalyst 14.

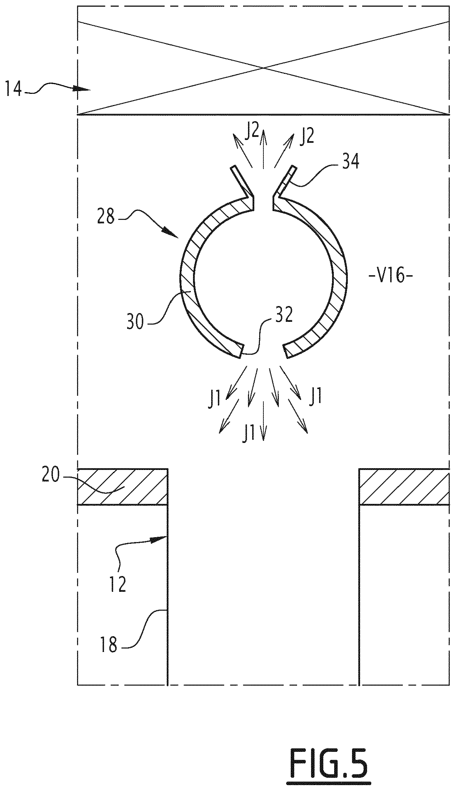

The primary function of the blower means 20 is to unclog the filter bags 18 by sending air under pressure towards the outlet of the filter bags 18, the corresponding air jets being indicated by arrows J1 in Figure 5. According to one practical embodiment, the means 28 for this purpose comprise a horizontal blow lance 30 provided in its lower part with openings, tubes and/or nozzles 32 which form the air jets J1 and direct them downwardly. The action of the blower means 28, in that they act to unclog the filter bags 18 further increases the performance of the device 10 without significantly increasing the cost thereof since these blower means 28 are astutely arranged in the free volume V16 of the casing 16, formed vertically between the filter bags 18 and the catalyst 14.

An optional arrangement of the blower means 28 which is also illustrated in Figure 5, is to use these means also to send air under pressure towards the catalyst 14. It will immediately be noted that insofar as the catalyst 14 as explained above is protected by the filter bags 18 against dust and acid pollutants contained in the fumes 1 to be purified, it is not absolutely necessary to make provision for regular blowing of the catalyst 14. This being so, as illustrated in Figure 5, the top part of the blower lance 30 can advantageously be provided with openings, tubes and/or nozzles 34 which form and direct air jets under pressure J2 towards the inlet of the channels of the catalyst 14. In this manner on each actuation of the blower means 28, the air jets J1 are sent downwards towards the outlets of the filter bags 18 to unclog these bags and maintain acceptable head loss in the filter 12, for example between 900 Pa and 1800 Pa, whilst at the same time the air jets J2 are set upwardly towards the inlet to the channels of the catalyst 14 to regenerate and clean this catalyst which, although protected by the filter bags 18, can progressively become deactivated.

## Claims

1. A device (10) for cleaning fumes,
this device comprising a fume circulation casing (16) inside which there are integrated both a filter (12) having vertical filter bags (18) and a channelled-structure catalyst (14), the channels of the catalyst having a hydraulic diameter of less than 6 mm, the fumes to be cleaned (1) passing through the filter bags and then the catalyst, wherein, inside the casing (16), the catalyst (14) is placed above the outlet of the filter bags (18), and
wherein the catalyst (14) is divided into unit elements (22) which are positioned horizontally side by side inside the casing and are vertically removable from the casing,
**characterized in that** the catalyst (14) is separated from the outlet of the filter bags (18) by a vertical distance (d) of between 2.5 and 6 times the hydraulic diameter of the filter bags, and **in that** the unit elements (22) are positioned side by side inside the casing (16) being arranged successively in several rows in a horizontal direction (X), each unit element being equipped with moving means (24) for moving the corresponding unit element in said horizontal direction relative to the casing.

2. The device according to claim 1, **characterized in that** the moving means comprise rolling elements (24).

3. The device according to claim 2, **characterized in that** the rolling elements are casters (24).

4. The device according to any of the preceding claims, **characterized in that** the moving means (24) cooperate with guides (26) secured to the casing (16) and extend in said horizontal direction (X).

5. The device according to claim 4, **characterized in that** the guides are rails (26).

6. The device according to any of the preceding claims, **characterized in that** the specific surface area of the catalyst (14) is between 800 and 1500 m²/m³.

7. The device according to any of the preceding claims, **characterized in that** the effective surface area of the catalyst (14) is between four and sixteen times the filtering surface of the filter bags (18).

8. The device according to claim 7, **characterized in that** the effective surface area of the catalyst (14) is between five and twelve times the filtering surface of the filter bags (18).

9. The device according to any of the preceding claims, **characterized in that** the device (10) further comprises blower means (28) inserted between the outlet of the bags (18) of the filter (12) and the inlet of the channels of the catalyst (14) and which send air under pressure towards the outlet of the filter bags.

10. The device according to claim 9, **characterized in that** the blower means (28) also send air under pressure towards the inlet of the channels of the catalyst (14).

11. An installation (I) for treating fumes, comprising:
- a device (10) for cleaning fumes to be treated (1) conforming to any of the preceding claims; and
- adding means (8) for adding a denitrification reagent to the fumes to be treated (1) upstream of the device (10).

## Patentansprüche

1. Vorrichtung (10) zum Reinigen von Rauchgasen,
welche Vorrichtung ein Rauchgas-Zirkulationsgehäuse (16) aufweist, innerhalb dessen sowohl ein Filter (12) mit vertikalen Filtersäcken (18) als auch ein kanalstrukturierter Katalysator (14) integriert sind, wobei die Kanäle des Katalysators einen hydraulischen Durchmesser von weniger als 6 mm haben und die zu reinigenden Rauchgase (1) durch die Filtersäcke und dann durch den Katalysator hindurchgehen,
wobei innerhalb des Gehäuses (16) der Katalysator (14) oberhalb des Auslasses der Filtersäcke (18) angeordnet ist, und
wobei der Katalysator (14) in Einheitselemente (22) geteilt ist, die horizontal Seite an Seite innerhalb des Gehäuses positioniert und vertikal aus dem Gehäuse entfernbar sind,
**dadurch gekennzeichnet, dass** der Katalysator (14) durch einen vertikal Abstand (d), der zwischen dem 2,5- und 6-Fachen des hydraulischen Durchmessers der Filtersäcke liegt, von dem Auslass der Filtersäcke getrennt ist, und dass die Einheitselemente (22) Seite an Seite innerhalb des Gehäuses (16) positioniert sind, wobei sie aufeinanderfolgend in mehreren Reihen in einer horizontalen Richtung (X) angeordnet sind, wobei jedes Einheitselement mit Bewegungsmitteln (24) zum Bewegen des entsprechenden Einheitselements in der horizontalen Richtung relativ zu dem Gehäuse ausgestattet ist.

2. Vorrichtung nach Anspruch 1, **dadurch gekennzeichnet, dass** die Bewegungsmittel Rollelemente (24) aufweisen.

3. Vorrichtung nach Anspruch 2, **dadurch gekennzeichnet, dass** die Rollelemente Fußrollen (24) sind.

4. Vorrichtung nach einem der vorhergehenden Ansprüche, **dadurch gekennzeichnet, dass** die Bewegungsmittel (24) mit Führungen (26) zusammenwirken, die an dem Gehäuse (16) befestigt sind und sich in der horizontalen Richtung (X) erstrecken.

5. Vorrichtung nach Anspruch 4, **dadurch gekennzeichnet, dass** die Führungen Schienen (26) sind.

6. Vorrichtung nach einem der vorhergehenden Ansprüche, **dadurch gekennzeichnet, dass** die Oberflächenkennzahl des Katalysators (14) zwischen 800 und 1500 m²/m³ liegt.

7. Vorrichtung nach einem der vorhergehenden Ansprüche, **dadurch gekennzeichnet, dass** die wirksame Oberfläche des Katalysators (14) zwischen dem Vier- und Zwölffachen der Filteroberfläche der Filtersäcke (18) liegt.

8. Vorrichtung nach Anspruch 7, **dadurch gekennzeichnet, dass** die wirksame Oberfläche des Katalysators (14) zwischen dem Fünf- und dem Zwölffachen der Filteroberfläche der Filtersäcke (18) liegt.

9. Vorrichtung nach einem der vorhergehenden Ansprüche, **dadurch gekennzeichnet, dass** die Vorrichtung (10) weiterhin Gebläsemittel (28) aufweist, die zwischen dem Auslass der Säcke (18) des Filters (12) und dem Einlass der Kanäle des Katalysators (14) eingefügt sind und die Luft unter Druck zu dem Auslass der Filtersäcke senden.

10. Vorrichtung nach Anspruch 9, **dadurch gekennzeichnet, dass** die Gebläsemittel (28) auch Luft unter Druck zu dem Einlass der Kanäle des Katalysators (14) senden.

11. Installation (I) zum Behandeln von Rauchgasen, welche aufweist:
- eine Vorrichtung (10) zum Reinigen von zu behandelnden Rauchgasen (1), entsprechend einem der vorhergehenden Ansprüche; und
- Hinzufügungsmittel (8) zum Hinzufügen eines Denitrifikationsmittels zu den zu behandelnden Rauchgasen (1) stromaufwärts der Vorrichtung (10).

## Revendications

1. Dispositif (10) d'épuration de fumées,
ce dispositif comprenant un caisson (16) de circulation des fumées, à l'intérieur duquel sont intégrés à la fois un filtre (12), qui a des manches de filtration (18) verticales, et un catalyseur (14) structuré en canaux qui ont un diamètre hydraulique inférieur à 6 mm, les fumées à épurer (1) traversant les manches du filtre puis le catalyseur,
dispositif dans lequel, à l'intérieur du caisson (16), le catalyseur (14) est placé au-dessus de la sortie des manches (18),
et dans lequel le catalyseur (14) est réparti dans des casiers (22), qui sont accolés horizontalement les uns aux autres à l'intérieur du caisson et qui sont amovibles verticalement par rapport au caisson,
**caractérisé en ce que** le catalyseur (14) est séparé de la sortie des manches (18) d'une distance verticale (d) comprise entre 2,5 et 6 fois le diamètre hydraulique des manches, et **en ce que** les casiers (22) sont accolés à l'intérieur du caisson (16) en étant agencés en plusieurs rangées se succédant dans une direction horizontale (X), chaque casier étant équipé de moyens (24) de déplacement dans ladite direction horizontale par rapport au caisson.

2. Dispositif suivant la revendication 1, **caractérisé en ce que** les moyens de déplacement comprennent des éléments de roulement (24).

3. Dispositif suivant la revendication 2, **caractérisé en ce que** les éléments de roulement sont des roulettes (24).

4. Dispositif suivant l'une quelconque des revendications précédentes, **caractérisé en ce que** les moyens de déplacement (24) coopèrent avec des guides (26) solidaires du caisson (16), qui s'étendent dans ladite direction horizontale (X).

5. Dispositif suivant la revendication 4, **caractérisé en ce que** les guides sont des rails (26).

6. Dispositif suivant l'une quelconque des revendications précédentes, **caractérisé en ce que** la surface spécifique du catalyseur (14) est comprise entre 800 et 1500 m²/m³.

7. Dispositif suivant l'une quelconque des revendications précédentes, **caractérisé en ce que** la surface effective du catalyseur (14) est comprise entre quatre et seize fois la surface de filtration des manches (18).

8. Dispositif suivant la revendication 7, **caractérisé en ce que** la surface effective du catalyseur (14) est comprise entre cinq et douze fois la surface de filtration des manches (18).

9. Dispositif suivant l'une quelconque des revendications précédentes, **caractérisé en ce que** le dispositif (10) comprend en outre des moyens de soufflage (28), qui sont intercalés entre la sortie des manches (18) du filtre (12) et l'entrée des canaux du catalyseur (14) et qui envoient de l'air de sous pression vers la sortie des manches.

10. Dispositif suivant la revendication 9, **caractérisé en ce que** les moyens de soufflage (28) envoient également de l'air sous pression vers l'entrée des canaux du catalyseur (14).

11. Installation de traitement de fumées (I), comprenant :
- un dispositif (10) d'épuration des fumées à traiter (1), qui est conforme à l'une quelconque des revendications précédentes, et
- un moyen (8) d'introduction, en amont du dispositif (10), d'un réactif de dénitrification dans les fumées à traiter (1).
